# EUROPEAN PATENT SPECIFICATION

(11) **EP 3 772 616 B1**
(45) Date of publication and mention of the grant of the patent: **07.02.2024**
(21) Application number: 19190695.7
(22) Date of filing: 08.08.2019
(51) Int. Cl.: F23R 3/26, F23R 3/34, F23R 3/36, F02C 9/18

(54) **METHOD FOR OPERATING A GAS TURBINE ASSEMBLY COMPRISING A SEQUENTIAL COMBUSTOR**
VERFAHREN ZUM BETREIBEN EINER GASTURBINENANORDNUNG MIT SEQUENTIELLER BRENNKAMMER
PROCÉDÉ DE FONCTIONNEMENT D'UN ENSEMBLE DE TURBINE À GAZ COMPRENANT UNE CHAMBRE DE COMBUSTION SÉQUENTIELLE

(43) Date of publication of application: 10.02.2021
(73) Proprietor: Ansaldo Energia Switzerland AG, 5401 Baden (CH)
(72) Inventor: DUESING, Michael Klaus, 79618 RHEINFELDEN (DE); CIANI, Andrea, 8057 ZURICH (CH)
(74) Representative: Studio Torta S.p.A.

(56) References cited:
- EP-A1- 2 287 456
- EP-A1- 2 767 699
- EP-A1- 3 130 848
- EP-A1- 3 376 003
- EP-A2- 2 650 511
- US-A1- 2013 219 904

## Description

### Field of the Invention

The present invention relates to the technical field of the gas turbine assemblies for power plants (in the following only "gas turbine"). In particular, the present invention relates to a method for operating a gas turbine having a sequential combustor. As "sequential combustor" we mean a combustor assembly comprising an upstream or first combustor followed by a downstream or second combustor. The second combustor may also be realized in form of fuel injectors arranged close to the exit of the combustor. In this invention the first combustor is configured for receiving compressed air and mixing this air with fuel whereas the second combustor is configured for receiving the hot gas leaving the first combustor and adding fuel and air into this hot gas. The first combustor is provided with a spark igniter whereas the second combustor is configured for performing a self/spontaneous ignition. More in detail, the method for operating of the present invention refers to the above sequential combustor when it is fed by a highly reactive fuel, for instance fuel comprising H2.

### Description of prior art

As known, a gas turbine assembly for power plants (in the following only gas turbine) comprises a rotor provided with a compressor unit, a combustor unit and at least a turbine unit. The compressor is configured for compressing air supplied at a compressor inlet. The compressed air leaving the compressor flows into a plenum and from there into a combustor. The combustor comprises a plurality of burners configured for injecting fuel in the compressed air. The mixture of fuel and compressed air flows into a combustion chamber where this mixture is combusted. The resulting hot gas leaves the combustion chamber and is expanded in the turbine performing work on the rotor. As known, the turbine comprises a plurality of stages, or rows, of rotor blades that are interposed by a plurality of stages, or rows, of stator vanes. The rotor blades are connected to the rotor whereas the stator vanes are connected to a vane carrier that is a concentric casing surrounding the turbine unit.

In order to achieve a high efficiency, a high turbine inlet temperature is required. However, in general this high temperature involves an undesired high NOx emission level. In order to reduce this emission and to increase operational flexibility without decreasing the efficiency, the so called "sequential" gas turbine is particularly suitable. In general, a sequential gas turbine comprises two combustors or combustion stages in series wherein each combustor is provided with a plurality of burners and with at least a combustion chamber. Following the main gas flow direction, usually the upstream or first combustor comprises a plurality of so-called "first" burners. These first burners may be "premix burners" wherein the term "premix" emphasizes the fact that each burner of the first combustor is configured not only for injecting the fuel directly in the compressed air (for instance with a so called diffusion flame) but also for mixing (with a swirl) the compressed air and the fuel before injecting the mixture into the combustion chamber. Therefore in the following with the terms "first burner" we mean the burner in the first stage of the sequential combustor wherein each burner may be configured for receiving the compressed air and injecting fuel in this coming air for realizing a diffusion flame (e.g. by pilot lance without any premix) and/or a premix flame. This kind of burner is today widely used because a diffusion flame is useful under some condition (for instance during the cold starting operation) whereas a premix flame allows to reduce the NOx emissions during the normal operation. The downstream or second combustor is also called "reheat" or "sequential" combustor and it is fed by the hot gas leaving the first combustor. Also, the second combustor is provided with a plurality of burners configured for injecting fuel in the hot gas coming from the first combustor. Due to the high gas temperature, the operating conditions downstream the second burners allow a self/spontaneous ignition of the fuel/air mixture. Also these reheat burners are configured for performing a premix for the hot gas and the fuel before the spontaneous ignition. Therefore in the following with terms second burners we mean the burners at the second stage of combustion in the sequential combustor.

Today two different kinds of sequential gas turbines are known. According to the first embodiment the first and second combustors are annular shaped and are physically separated by a stage of turbine blades, called high pressure turbine. According to a second embodiment, the gas turbine is not provided with the high pressure turbine and the combustor unit is realized in form of a plurality of can-combustors. In this embodiment each can-combustor comprises a first combustor (first stage) and a second (second stage) combustor arranged directly one downstream the other inside the common can shaped casing. In both embodiments the burners are configured for injecting different kinds of fuel, i.e. liquid and gas fuel, and carrying air (i.e. a little part of the compressed air leaving the compressor). In view of the above, the burners are provided with separated channels or ducts for feeding the gas fuel, liquid fuel and carrying air to relevant burner nozzles. EP 2206963 discloses a prior art gas turbine provided with sequential can combustors. According to this example, the second burners are arranged close to the exit of the combustor and are fed by fuel and a spilled part of the compressed air directed to the first combustor.

Starting from the above mentioned structures of prior art sequential gas turbines, today is present the need of improving the fuel flexibility while keeping low emission and high performance. In particular, a real challenge today is to use a highly reactive fuel, e.g. with high amounts of H2 or higher hydrocarbons (e.g. ethane, propane). Indeed, the increasing use of renewables for energy production is also accompanied by an increasing need for flexible power production, while aiming at carbon free emissions. The potential solutions of energy storage of excess generation from renewables through hydrogen production and precombustion carbon capture are gaining momentum. Both scenarios require gas turbines capable of operation with hydrogen-based fuels. At the same time, the composition of natural gas considered for use within gas turbines is becoming significantly more variable due to increased use of liquefied natural gas and a wider range of gas sources and extraction methods. Fuel flexibility, both in terms of the amount of hydrogen and higher hydrocarbons is therefore of utmost importance in modern gas turbine development.

A change in fuel reactivity implies a change in flame location. In particular, higher fuel reactivity (like H2) forces the flame to move upstream, increasing NOx emissions, and potentially overheating the burners. Consequently, when burning highly reactive fuels (e.g. fuels containing large quantities of either higher hydrocarbons or hydrogen) the flame moves upstream compared to the case of natural gas, thus increasing the risk of flashback. Since the position of the flame in the second combustor can be effectively controlled by the temperature at the inlet of the reheat combustor (self/spontaneous ignition), by lowering the inlet temperature it is therefore possible to move the flame downstream. Therefore, the negative effect of higher fuel reactivity (flashback) in the reheat combustor can be compensated by lowering the first stage temperature. According to the prior art practice, in order to mitigate the flashback risks by keeping the flame at its design position in the reheat combustor is obtained by simply injecting less fuel in the first stage of combustion. However, this prior art practice generates high NOx emissions and therefore a large amounts of diluents (nitrogen, steam) need to be added in the gas flow and/or selective catalytic reduction devices have to be used to keep the NOx emissions below the limits. Moreover, this known solution cannot be applied for very reactive fuel having high rate of H2. Indeed, the first stage flame temperature cannot be lowered beyond a certain limit called "lean blow out" temperature. Under this temperature the operation of the first combustor is compromised.

The following documents may be cited as relevant prior art documents.

US2013219904 relates to a method for operating a gas turbine with sequential combustion and low CO emissions.

EP3376003 relates to gas turbine systems, and more particularly, to sequential combustion gas turbines.

EP2767699 refers to a method for operating a gas turbine with active measures to condition the fuel composition as well as such a gas turbine.

EP2287456 refers to a gas turbine provided with a CO2 capture unit to reduce and control the amount of CO2 released into the atmosphere.

### Disclosure of the invention

Accordingly, a primary scope of the present invention is to provide a method for operating a gas turbine assembly for power plants (in the following only gas turbine) suitable for overcoming the drawbacks of the current prior art practice. In particular, the scope of the present invention is to provide a method for operating a gas turbine having a sequential combustor configured to allow a reliable control of the temperature inside the combustor also when the supplied fuel is a highly reactive fuel, for instance H2-based fuel having an high % of H2 (in vol. up to 1000).

In general, a gas turbine suitable for implementing the present invention is a so called sequential gas turbine, i.e. a gas turbine having an axis and comprising:
- a compressor for compressing air;
- a sequential combustor for mixing and combusting the compressed air with at least a high reactive fuel;
- at least a turbine for expanding the combusted hot gas and for performing work on a rotor.

As known, a sequential combustor comprises:
- a first combustor provided with a plurality of first burners fed by compressed air and configured for injecting fuel, in particular high reactive fuel, in the compressed air and with at least a first combustion chamber;
- a second combustor provided with a plurality of second burners, fed by hot gas leaving the first combustor and configured for injecting fuel, in particular high reactive fuel, in the hot gas and with at least a second combustion chamber where a spontaneous ignition occurs.

Since the present invention related the operating of the gas turbine when fed by a high reactive fuel, of course the gas turbine according the claimed solution comprises a feeding or a source of a high reactive fuel (for instance a H2 based fuel).

Referring to the first combustor, as known the supplied compressed air is the air leaving a compressor upstream arranged in the gas turbine with respect to the sequential combustor.

As mentioned in the chapter referring to the prior art, today there is the need to provide a new operation mode for a sequential combustor when the supplied fuel is a highly reactive fuel. With the terms "high reactive fuel" we mean a fuel having higher reactivity compared with natural gas. An example of high reactive fuel is a hydrogen-based fuel. According to the general aspect of the present invention, the gas turbine moreover comprises an innovative by-pass circuit configured for spilling at least part of the compressed air directed from the compressor to the first burners and for injecting this spilled air inside the sequential combustor downstream the first burners (i.e. by-passing the first burners) directly inside the combustor casing (i.e. not passing by the second burners). According to the invention with the term "circuit" we mean a real duct or path limited by an additional structure but also some simple injection points or holes that can be provided in the combustor casing/structure facing the plenum fed by the compressed air directed to the first burner.

Due to the presence of this spilled air injected in the combustor by-passing the first burners it is possible to lower the temperature in the first or in the second combustor. Since the new spilled air path is not flexible, in order to provide an appropriate inlet temperature to the second combustor and to avoid the so called "lean blow out" problem, according to the invention the first stage fuel massflow can be adapted depending on the fuel reactivity.

Having a lower temperature at the inlet of the second combustor, even if the fuel used is a high reactive fuel, the flame in the second combustion chamber is always in a correct position (thus avoiding the "flashback" problem).

A gas turbine provided with the innovative by-pass circuit of the present invention comprises a sequential combustor assembly in form of a plurality of can combustors.Each can combustor comprises a first and a second combustor wherein the first combustor comprises a front panel supporting the burners and a liner defining the first combustion chamber. According to the invention, this liner may be provided with a plurality of holes, namely dilution air injection holes. As known, each can combustor is provided with an air mixer between the first combustion chamber and the second burner. Starting from this structure the by-pass circuit may be configured for injecting the spilled air inside the first combustion chamber through:
- the front panel;
- the liner dilution air injection holes.

Please notice that according to prior art the liner may also be provided with other holes having a specific layout configured for generating a thermacoustic effect inside the combustion chamber. In this case, the liner dilution air injection holes may be realized upstream or downstream these thermacoustic holes. Alternatively, the by-pass circuit may be directly connected to the thermacoustic holes providing these holes with a two different features.

In this can structure the by-pass circuit may be configured for injecting the spilled air as additional air through the air mixer and/or for injecting the spilled air between the air mixer and the second burner.

Also for the can combustors, all the above mentioned different embodiments of the by-pass circuit may be considered as alternative embodiments or combined embodiments. Please notice that the by-pass circuits have been described only in view of the position of the injecting points inside the combustor because on one side the skill person can implement these circuits without any required additional structural specification and on the other side any additional structural specification involves an undue limitation of the claimed scope of protection.

In view of the above the present invention refers to a method for operating a gas turbine for power plant, in particular a method for operating a gas turbine for power plant when fed by a high reactive fuel. This method comprises the steps of:
a) providing a gas turbine as foregoing described (i.e. with a sequential combustor);
b) spilling part of the compressed air directed from the compressor to the first burner;
c) injecting the spilled air directly inside the combustor by-passing the first burner.

In the above definition the term "directly" means that the claimed spilled air is not injected inside the second burners that can be already fed by air.

An implicit step is feeding the gas turbine with a high reactive fuel, for instance a H2 based fuel.

Moreover, since the amount of the spilled air is not flexible during operation, the method of the present invention may comprise the step of adapting the fuel split between the first and the second combustor in order to have an appropriate inlet temperature of the second combustor.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a gas turbine comprising a sequential combustor not part of the present invention;
- figure 2 is a schematic view of an embodiment of some parts of a gas turbine comprising a sequential combustor that can provided with the innovative features according to the present invention;
- figure 3 is a schematic view of the sequential combustor of the gas turbine disclosed in figure 2 along with a diagram disclosing the temperature variation inside the sequential combustor;
- figure 4 in an enlarged view of the part labelled as IV in figure 1 disclosing some examples not part of the invention;
- figure 5 is a more detailed figure of the sequential combustor disclosed in figure 2 disclosing some examples of how the invention can be implemented in a gas turbine as disclosed in figure 2.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

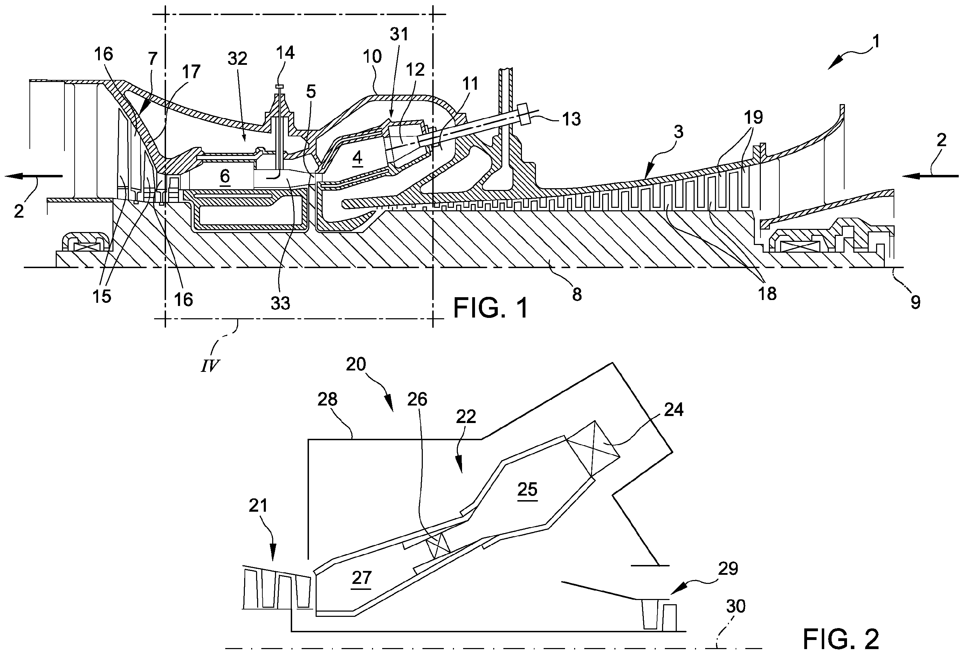

Reference is now made to Fig. 1 that is a schematic view of a gas turbine 1 not part of the invention and comprising a sequential combustor that can be provided with the innovative features according to the present invention. In particular, figure 1 discloses a gas turbine with a high pressure and a low pressure turbine. Following the main gas flow 2, the gas turbine 1 of figure 1 comprises a compressor 3, a first combustor 31, a high-pressure turbine 5, a second combustor 32 and a low-pressure turbine 7. The compressor 3 and the two turbines 5, 7 are part of or are connected to a common rotor 8 rotating around an axis 9 and surrounded by a concentric casing 10. The compressor 3 is supplied with air and is provided with rotating blades 18 and stator vanes 19 configured for compressing the air entering the compressor 3. Once left the compressor, the compressed air flows into a plenum 11 and from there into a plurality of first burners 12 of the first combustor 31 arranged as a ring around the axis 9. Each first burner 12 in configured for injecting at least a kind of fuel (supplied by at least a first fuel supply 13) in the air flow. Preferably, this first burner 12 may be defined as a "premix" burner because it is configured for mixing the air and the injected fuel before the ignition point. The fuel/compressed air mixture flows into a first combustion chamber 4 annularly shaped where this mixture are combusted via a forced ignition, for instance by a spark igniter. The resulting hot gas leaves the first combustor chamber 4 and is partially expanded in the high-pressure turbine 5 performing work on the rotor 8. Downstream of the high-pressure turbine 5 the hot gas partially expanded flows into a second burner 33 where at least a kind of fuel supplied by at least a fuel lance 14 is injected. The partially expanded gas has a high temperature and contains sufficient oxygen for a further combustion that occurred based on a self-ignition in the second combustion chamber 6 arranged downstream the second burner 33. This second burner 33 is also called "reheat" burner. The reheated hot gas leaves the second combustion chamber 6 and flows in the low-pressure turbine 7 where it is expanded performing work on the rotor 8. The low-pressure turbine 7 comprises a plurality of stages, or rows, of rotor blades 15 arranged in series in the main flow direction. Such stages of blades 15 are interposed by stages of stator vanes 16. The rotor blades 15 are connected to the rotor 8 whereas the stator vanes 16 are connected to a vane carrier 17 that is a concentric casing surrounding the low-pressure turbine 7.

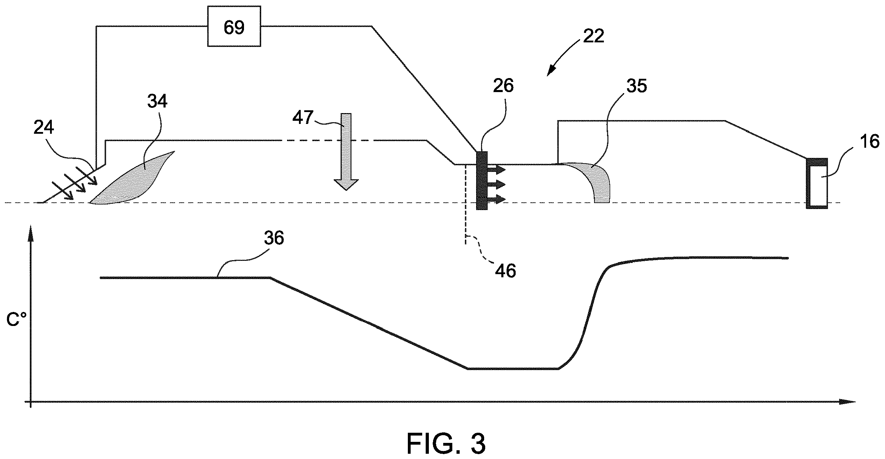

Reference is now made to Fig. 2 that is a schematic view of an example of a gas turbine 20 comprising a sequential combustor that can be provided with the innovative features according to the present invention. In particular, figure 2 discloses a gas turbine 20 provided with a compressor 29, a turbine 21 and a sequential combustor 22. The sequential combustor 22 of figure 2 comprises a plurality of so-called can combustors, i.e. a plurality of casings wherein each can combustor houses a plurality of first burners 24, for instance four first burners 24, a first combustion chamber 25, a second burner 26, and a second combustion chamber 27. Upstream the second burner 26 an air mixer (represented with reference 47 only in figure 3) may be provided for adding air in the hot gas leaving the first combustion chamber 25. The sequential combustor arrangement is at least in part housed in an outer casing 28 supporting the plurality of can combustor 22 arranged as a ring around the turbine axis. At least a kind of fuel is introduced via a first fuel injector (not shown) into the first burners 24 wherein the fuel is mixed with the compressed gas supplied by the compressor 29. Also each first burner 24 of this embodiment is a "premix" burner configured for generating a premixed flame. Finally, the hot gas leaving the second combustion chamber 27 expands in the turbine 21 performing work on a rotor 30.

Reference is now made to Fig. 3 that is a schematic view of a can combustor 22 that may be a combustor of the turbine of figure 2. In particular, figure 3 discloses also a diagram showing how the temperature changes along this can combustor. The first stage premixed burner 24 utilizes aerodynamic structures to stabilize a propagating premix flame providing excellent flame stability and combustion efficiency over an extensive operational range. This flame having a correct distance from the burner nozzles is represented by the reference 34. The second burner 26 is a primarily auto-ignition controlled burner. The flame generated by the second burner 26 having a correct distance is represented by the reference 35. These two contrasting methods of generating the flames provide a substantial advantage in minimising NOx emissions at base load while maximising the engine's turndown capability. The flexibility of the can combustor 22 can be applied to allow low emission performance for a wide range of fuels. For each fuel type an operational approach through the adjustment of the inlet temperature of the second burner 26 (temperature at ref. 46 after the reference 47 representing the air dilution mixer) can be defined which allows both flame locations to be correctly maintained. In case of high reactivity fuels (e.g. high hydrogen or higher hydrocarbon contents) the flames at the second burner 26 move upstream as represented by the reference 35'. These movement towards the burners involves some drawbacks and overheating of the burner nozzles. According to the prior art practice, today the proposed solution for moving downstream the flames 35' to a correct position 35 is to reduce the first stage flame temperature (lowering the line 36 of the diagram of Figure 3) by reducing the fuel injected in the first stage. However, this solution may not be sufficient on its own when the fuel is a very high reactive fuel, i.e. having a very high hydrogen content up to 100%. Indeed, in this case in order to report the flame 35' in the correct position a theoretical too low first stage flame temperature is required, i.e. a first stage flame temperature under the so called lean blow out temperature. Therefore, according to the prior art practice this compensation is possible only for fuel having a limited % of H2 in Vol.

In order to overcome this limit, the present invention provides the solution of adding at least air by-pass circuit configured for injecting part of the compressed air in the combustor by-passing the first burners. In this way the inlet temperature (or the second flame position) may be controlled without lowering the first stage flame temperature under the so called lean blow out temperature. In figure 3 the reference 69 refers to a feeding of a highly reactive fuel connected to the first burners and to the second burners

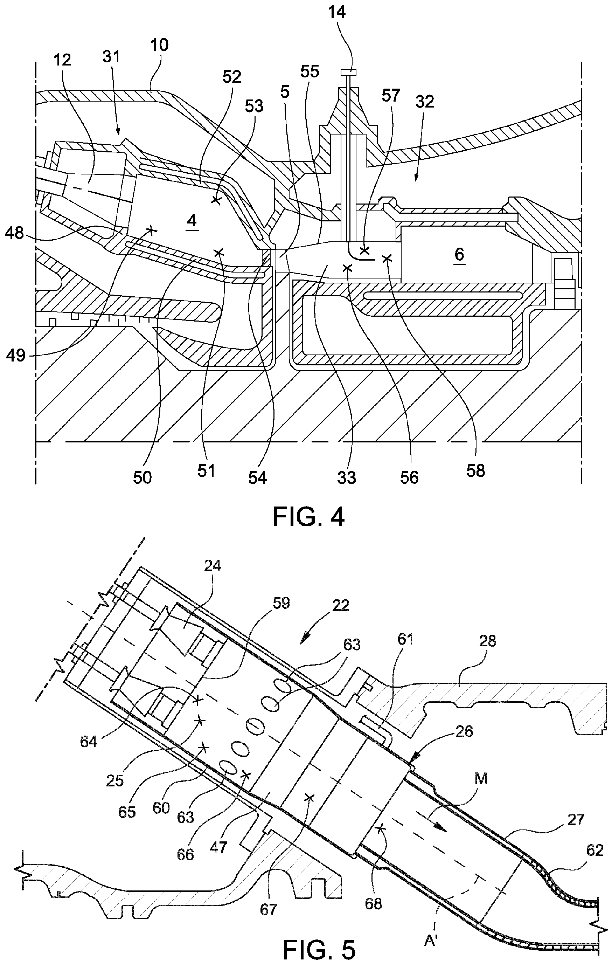

Reference is now made to figure 4 that is the enlarged view of the portion of figure 1 labelled with the reference IV. In particular, figure 4 disclose the sequential combustor assembly of figure 1 not part of the invention. Starting from this structure, the air by-pass circuit of the present invention may be implemented according to some different embodiments. In particular, the by-pass circuit may be configured:
- for injecting the spilled air inside the first combustion chamber 4 through the front panel 48 of the first burners 12 (point 49 in figure 4);
- for injecting the spilled air inside the first combustion chamber4 through the inner wall 50 (point 51 in figure 4);
- for injecting the spilled air inside the first combustion chamber through the outer wall 52 (point 53 in figure 4);
- for injecting the spilled air inside the first combustion chamber through the high pressure turbine vane 54 or through the high pressure turbine blade 5.

Always starting from the same gas turbine structure, the by-pass circuit may be configured for injecting the spilled air inside the second combustor 32 through:
- between the outlet guide vane and the fuel lance 14 (point 56 in figure 4 passing by the wall 55);
- at the fuel lance 14 (point 57 in figure 4);
- downstream the fuel lance 14 (point 58 in figure 4).

All the above mentioned different embodiments of the by-pass circuit may be considered as alternative embodiments or combined embodiments.

Reference is now made to figure 5 that is a more detailed view of the combustor assembly of figure 2. In particular, figure 5 discloses a can combustor having an axis A' . Following the main gas flow M, the combustor 22 comprises the first burners 24, the relative front panel 59, the liner 60 with holes 63 defining the first combustion chamber 25 and an air mixer 47. Downstream the air mixer 47 a second burner 26 is present with the relative feeding of fuel 61 (in particular a source of H2 based fuel) followed by the second combustion chamber 27 and a transition piece 62. Starting from this structure, the air by-pass circuit of the present invention may be implemented according to some different embodiments. In particular, the by-pass circuit may be configured for injecting the spilled air inside the first combustion chamber 25 through:
- the front panel 59 (point 64 in figure 5);
- dilution air injection holes 63 provided in the liner.

As foregoing mentioned, according to prior art the liner may also be provided with other holes (not represented in figure 5) having a specific layout configured for generating a thermacoustic effect inside the combustion chamber. In this case, the liner dilution air injection holes may be realized upstream or downstream these thermacoustic holes (points 65 and 66 in figure 5). Alternatively, the by-pass circuit may be directly connected to the thermacoustic holes providing these holes with a two different features.

In this can structure the by-pass circuit may be configured for injecting the spilled air as additional air through the air mixer 47 and/or for injecting the spilled air between the air mixer 47 and the second burner 26 (point 67 in figure 5). However, according to the present invention the can combustor may also be not provided with the above air mixer 47 and the second burners may be arranged closed to the combustor exit.

All the above mentioned different embodiments of the by-pass circuit may be considered as alternative embodiments or combined embodiments.

Although the invention has been explained in relation to its preferred embodiment(s) as mentioned above, it is to be understood that many other possible modifications and variations can be made without departing from the scope of the present invention. It is, therefore, contemplated that the appended claims will cover such modifications and variations that fall within the true scope of the invention.

## Claims

1. Method for operating a gas turbine for power plant fed by a high reactive fuel; the method comprises the steps of:
a) providing a gas turbine having an axis (A) and comprising:
- a compressor (3, 30) for compressing air,
- a feeding of a highly reactive fuel (69);
- a sequential combustor (22, 31, 33) for mixing and combusting the compressed air with the fuel
- at least a turbine (5, 7, 21) for expanding the combusted hot gas;
wherein the sequential combustor (22, 31, 33) comprises:
- a first combustor provided with at least a first burner (12, 24) fed by compressed air and configured for injecting fuel in the compressed air and with at least a first combustion chamber (4, 25);
- a second combustor provided with a plurality of second burners (26, 33), fed by hot gas leaving the first combustor and configured for injecting fuel in the hot gas and with at least a second combustion chamber (6, 27);
wherein
the gas turbine comprises at least a by-pass circuit configured for spilling at least part of the compressed air directed to the first burners (12, 24) and for injecting this spilled air directly inside the sequential combustor downstream the first burners (12, 24);
wherein the sequential combustor (22) comprises a plurality of can combustors, each can combustor comprising the first and the second combustor;
b) feeding the gas turbine with a high reactive fuel;
c) spilling part of the compressed air directed from the compressor to the first burner;
d) injecting the spilled air directly inside the combustor by-passing the first burner;
wherein the fuel massflow split between the first stage and the second stage is adjusted such that the inlet temperature to the second stage is such that a target flame position of the reheat flame inside the second combustion chamber is ensured.

2. Method as claimed in claim 1, wherein the step d) is performed by providing the first combustor with a front panel and a liner defining the first combustion chamber (25) provided with a plurality of dilution air injection holes; the by-pass circuit is configured for injecting the spilled air inside the first combustion chamber (25) through:
- the front panel; and/or
- the liner dilution air injection holes.

3. Method as claimed in claim 2, wherein the step d) is performed by providing each can combustor with an air mixer between the first combustion chamber (25) and the second burner (26), the by-pass circuit is configured for injecting the spilled air as additional air through the air mixer.

4. Method as claimed in claim 3, wherein the step d) is performed by providing the by-pass circuit configured for injecting the spilled air between the air mixer and the second burner (26).

## Patentansprüche

1. Verfahren zum Betreiben einer Gasturbine für ein Kraftwerk, das mit einem hochreaktiven Brennstoff gespeist wird; wobei das Verfahren die Schritte umfasst:
a) Bereitstellen einer Gasturbine, die eine Achse (A) aufweist und umfasst:
- einen Verdichter (3, 30) zum Verdichten von Luft,
- eine Zuführung eines hochreaktiven Brennstoffs (69);
- eine sequentielle Verbrennungseinrichtung (22, 31, 33) zum Mischen und Verbrennen der verdichteten Luft mit dem Brennstoff;
- wenigstens eine Turbine (5, 7, 21) zum Entspannen des verbrannten Heißgases;
wobei die sequentielle Verbrennungseinrichtung (22, 31, 33) umfasst:
- eine erste Verbrennungseinrichtung, die mit wenigstens einem ersten Brenner (12, 24), der mit verdichteter Luft gespeist wird und dazu konfiguriert ist, Brennstoff in die verdichtete Luft zu injizieren, und mit wenigstens einer ersten Brennkammer (4, 25) versehen ist;
- eine zweite Verbrennungseinrichtung, die mit mehreren zweiten Brennern (26, 33), die mit dem aus der ersten Verbrennungseinrichtung austretenden Heißgas gespeist werden und dazu konfiguriert sind, Brennstoff in das Heißgas zu injizieren, und mit wenigstens einer zweiten Brennkammer (6, 27) versehen ist;
wobei
die Gasturbine wenigstens einen Umgehungskreis umfasst, der dazu konfiguriert ist, wenigstens einen Teil der verdichteten Luft, die zu den ersten Brennern (12, 24) geleitet wird, auszuleiten und diese ausgeleitete Luft direkt in die sequentielle Verbrennungseinrichtung stromabwärts der ersten Brenner (12, 24) zu injizieren;
wobei die sequentielle Verbrennungseinrichtung (22) mehrere Dosenbrenner umfasst, wobei jeder Dosenbrenner die erste und die zweite Verbrennungseinrichtung umfasst;
b) Speisen der Gasturbine mit einem hochreaktiven Brennstoff;
c) Ausleiten eines Teils der verdichteten Luft, die von dem Verdichter zu dem ersten Brenner geleitet wird;
d) Injizieren der ausgeleiteten Luft direkt in die Verbrennungseinrichtung unter Umgehung des ersten Brenners;
wobei die Aufteilung des Brennstoffmassenstroms zwischen der ersten Stufe und der zweiten Stufe so eingestellt wird, dass die Einlasstemperatur in die zweite Stufe so beschaffen ist, dass eine Zielflammenposition der Nacherhitzungsflamme innerhalb der zweiten Brennkammer gewährleistet ist.

2. Verfahren nach Anspruch 1, wobei der Schritt d) durchgeführt wird, indem die erste Brennkammer mit einer Frontplatte und einer Auskleidung versehen wird, die die erste Brennkammer (25) definieren, die mit mehreren Verdünnungsluft-Injektionslöchern versehen ist;
der Umgehungskreis dazu konfiguriert ist, die ausgeleitete Luft in die erste Brennkammer (25) zu injizieren durch:
- die Frontplatte; und/oder
- die Verdünnungsluft-Injektionslöchern der Auskleidung.

3. Verfahren nach Anspruch 2, wobei der Schritt d) durchgeführt wird, indem jeder Dosenbrenner mit einem Luftmischer zwischen der ersten Brennkammer (25) und dem zweiten Brenner (26) versehen wird, wobei der Umgehungskreis dazu konfiguriert ist, die ausgeleitete Luft als zusätzliche Luft durch den Luftmischer zu injizieren.

4. Verfahren nach Anspruch 3, wobei der Schritt d) durchgeführt wird, indem der Umgehungskreis vorgesehen wird, der dazu konfiguriert ist, die ausgeleitete Luft zwischen dem Luftmischer und dem zweiten Brenner (26) zu injizieren.

## Revendications

1. Procédé d'exploitation d'une turbine à gaz pour une centrale électrique alimentée par un combustible hautement réactif ; le procédé comprenant les étapes suivantes :
a) fournir une turbine à gaz ayant un axe (A) et comprenant :
- un compresseur (3, 30) pour comprimer l'air,
- une alimentation d'un combustible hautement réactif (69) ;
- une chambre de combustion séquentielle (22, 31, 33) pour mélanger et brûler l'air comprimé avec le combustible
- au moins une turbine (5, 7, 21) pour détendre les gaz chauds brûlés ;
dans lequel la chambre de combustion séquentielle (22, 31, 33) comprend :
- une première chambre de combustion dotée d'au moins un premier brûleur (12, 24) alimenté par de l'air comprimé et configuré pour injecter du carburant dans l'air comprimé, et d'au moins une première chambre de combustion (4, 25) ;
- une seconde chambre de combustion dotée d'une pluralité de seconds brûleurs (26, 33), alimentée par les gaz chauds sortant de la première chambre de combustion et configurée pour injecter du combustible dans les gaz chauds, et dotée d'au moins une seconde chambre de combustion (6, 27) ;
dans lequel
la turbine à gaz comprend au moins un circuit de dérivation configuré pour déverser au moins une partie de l'air comprimé dirigé vers les premiers brûleurs (12, 24) et pour injecter cet air déversé directement à l'intérieur de la chambre de combustion séquentielle en aval des premiers brûleurs (12, 24) ;
dans lequel la chambre de combustion séquentielle (22) comprend une pluralité de chambres de combustion, chaque chambre de combustion comprenant la première et la deuxième chambre de combustion ;
b) alimenter la turbine à gaz avec un combustible hautement réactif ;
c) déverser une partie de l'air comprimé dirigé du compresseur vers le premier brûleur ;
d) injecter l'air déversé directement à l'intérieur de la chambre de combustion en contournant le premier brûleur ;
dans lequel la répartition du débit massique du combustible entre le premier et le deuxième étage est réglée de manière à ce que la température d'entrée du deuxième étage soit telle qu'une position cible de la flamme de réchauffage à l'intérieur de la deuxième chambre de combustion soit assurée.

2. Procédé selon la revendication 1, dans lequel l'étape d) est réalisée en dotant la première chambre de combustion d'un panneau frontal et d'un revêtement définissant la première chambre de combustion (25) pourvue d'une pluralité de trous d'injection d'air de dilution ; le circuit de dérivation est configuré pour injecter l'air déversé à l'intérieur de la première chambre de combustion (25) à travers :
- le panneau frontal ; et/ou
- les trous d'injection d'air de dilution du revêtement.

3. Procédé selon la revendication 2, dans lequel l'étape d) est réalisée en dotant chaque chambre de combustion d'un mélangeur d'air entre la première chambre de combustion (25) et le second brûleur (26), le circuit de dérivation étant configuré pour injecter l'air déversé en tant qu'air supplémentaire à travers le mélangeur d'air.

4. Procédé selon la revendication 3, dans lequel l'étape d) est réalisée en fournissant le circuit de dérivation configuré pour injecter l'air déversé entre le mélangeur d'air et le second brûleur (26).
